Europäisches Patentamt

European Patent Office

Office européen des brevets

(19)

(11) Publication number: **0 185 394 B1**

## EUROPEAN PATENT SPECIFICATION

(12)

(45) Date of publication of patent specification: **17.07.91**  (51) Int. Cl.⁵: **F16B 19/00**

(21) Application number: **85116402.0**

(22) Date of filing: **20.12.85**

---

(54) Fastener.

---

(30) Priority: **21.12.84 JP 270031/84**

(43) Date of publication of application:
**25.06.86 Bulletin 86/26**

(45) Publication of the grant of the patent:
**17.07.91 Bulletin 91/29**

(84) Designated Contracting States:
**AT DE FR GB**

(56) References cited:
**DE-B- 1 162 983**
**US-A- 3 385 157**
**US-A- 3 964 364**
**US-A- 4 083 289**
**US-A- 4 158 450**

(73) Proprietor: **SONY CORPORATION**
**7-35 Kitashinagawa 6-Chome Shinagawa-ku**
**Tokyo 141(JP)**

(72) Inventor: **Yamada, Hidetaka c/o SONY KOHDA**
**CORPORATION**
**1, Aza-Suzumegairi Ohaza-Sakazaki Kohda-cho**
**Nukata-gun Aichi-ken(JP)**

(74) Representative: **Schmidt-Evers, Jürgen,**
**Dipl.-Ing. et al**
**Patentanwälte Dipl.-Ing. H. Mitscherlich**
**Dipl.-Ing. K. Gunschmann Dipl.-Ing.**
**Dr.rer.nat. W. Körber Dipl.-Ing. J. Schmidt-Evers Dipl.-Ing. W. Melzer Steinsdorfstrasse**
**10**
**W-8000 München 22(DE)**

## Description

The present invention relates to a fastener according to the generic part of claim 1.

US-A-3,385,157 describes such a fastener, the cylindrical extension of which has the same diameter throughout its length, thus allowing only members having through openings of the same diameter to be fixed. A further disadvantage is the complicated design of the outer periphery of the extension which is provided with ribs extending in axial direction of the extension and progressively decreasing in width towards the free end of said extension. In the fixed state the two members are held in contact with each other by the supporting means provided on the main body in form of a rather flexible sealing lip and a shoulder formed by those portions of the ribs at the free end of the extension which, protruding from the through opening, are expanded radially outwardly. Hence, the shoulder and the supporting means lack sufficient stiffness and are therefore not suitable for holding the members together with a sufficient rigidity and for obtaining a fastener featuring the required durability.

It is an object of the present invention to provide a fastener of a simpler design having improved retaining ability and durability.

This object is attained by the characterizing features of new claim 1.

Instead of holding the members between the flexible supporting means of the main body and flexible shoulder being formed while driving the knock member into the axial opening, the fastener according to the present invention holds the members between circular ribs which are formed during manufacture of the fastener. The middle rib separates the two members. Using the three circular ribs for holding the members together, the fastener according to the present invention is a straightforward design which does not require the complicated rib structure of the extension of the prior art fastener.

According to claim 2 the main body has two ribs defining therebetween one of the two annular grooves, and the extension has one rib defining together with the adjacent one of the two ribs of the main body the other of the two annular grooves.

It is also possible that the fastener has two extensions one on each side of the main body, the main body having one rib and the extensions having two ribs defining together with the one rib of the main body the two annular grooves.

Furthermore, each extension may have at least one slit allowing radial deformation of the deformable portion.

The axial opening may be cylindrical and the knock member may be tapered such that its larger diameter end is placed within the deformable portion of the extension when driven into it.

It is also possible that the knock member is cylindrical and the axial opening is tapered towards the radially deformable portion of the extension.

Furthermore, the axial opening may be open at the free end of the extension or at the main body portion of the fastener.

According to claim 10, the main body is initially fixed to the corresponding one of the two members by means of outsert moulding.

The fastener according to the preceeding claims may be utilized together with an assembly of two board-like members. In this case it is advantageous that the rib formed at the extension of the fastener has a greater diameter than the inner diameter of the through opening of one of the members, whereby inserting the extension through the through opening causes radial inward deformation of the deformable portion of the extension.

The present invention will be understood more fully from the detailed description given herebelow and from the accompanying drawings of the preferred embodiment of the present invention, which however, should not be taken to limit the invention to the specific embodiment but are for explanation and understanding only.

In the drawings:

Fig. 1 is a cross-section through the preferred embodiment of a fastener according to the present invention;

Fig. 2 is a plan view of the fastener of Fig. 1;

Fig. 3 is a cross-section similar to Fig. 1, but showing the state in which two members are fixed to each other;

Fig. 4 is a perspective illustration showing application of the preferred embodiment of the fastener to an actual substrate assembly;

Fig. 5 is a cross-section through a modified form of the fastener of Fig. 1;

Fig. 6. is a cross-section through another modified fastener; and

Fig. 7 is a cross-section through yet another modified fastener.

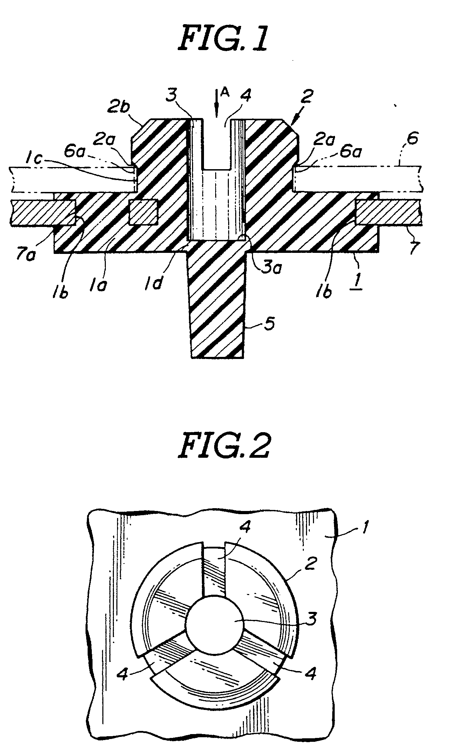

Referring now to the drawings, particularly to Fig. 1, the preferred embodiment of a fastener 1 is made of a synthetic resin, such as polyacetal, polypropylene and so forth. In the shown embodiment, the fastener 1 is designed to fix a second substrate 6 of a metal plate to a first substrate 7 of a metal plate. The fastener 1 has a cylindrical fastening extension 2 with a top end with an annular fastening jaw 2a. The fastening jaw 2a has a tapered axial end 2b. The fastening extension 2 also has an axial central recess 3 open at its upper end.

The fastener 1 also has an essentially disc-shaped main body 1a defining an annular groove 1b which firmly engages the inner periphery of a through opening 7a in the first substrate 7. The fastening jaw 2a defines another annular groove 1c which engages the inner periphery of a through opening 6a in the second substrate.

A plurality of slits 4 through the fastening extension 2 extend radially from the central recess 3. The axial depth of the slits 4 essentially corresponds to the axial length of the fastening jaw 2a in order to provide the fastening jaw 2a with sufficient flexibility for radial deformation.

A knock member 5 of generally conico-cylindrical form and integral with the main body 1a extends from the side of the main body 1a opposite from the fastening extension 2. The knock member 5 has one end having a larger diameter than the other end connected to the main body 1a. The diameter of the knock member 5 is, near the larger-diameter end at least, slightly greater than the internal diameter of the central recess 3 at least in the level of the through opening 6a of the second member.

As will be apparent from Fig. 1, the knock member 5 is connected to the main body 1a via an annular connecting section 1d. The connecting section 1d is relatively thin and weak so as to be easily broken by an impact applied to the head of the knock member 5.

The fastener 1 is initially fixed to the first substrate 7 by outsert molding. In practice, outsert molding of the fastener 1 is performed by injection molding and other appropriate molding processes. The techniques involved in outsert molding have been disclosed in the aforementioned United States Patent No. 4,158,450.

In order to assemble the second substrate 6 to the first substrate 7, the fastening extension 2 is first passed through the through opening 6a of the second substrate 6. When passing through the opening 6a, the tapered axial end 2b of the fastening jaw 2a contacts the inner peripheral edge of the opening 6a. This causes radially inward elastic deformation of the fastening extension 2. This allows the fastening extension 2 to pass through the through opening 6a so that the fastening jaw 2a projects out through the second substrate 6. At this state, the inner periphery of the opening 6a engages the groove 1c.

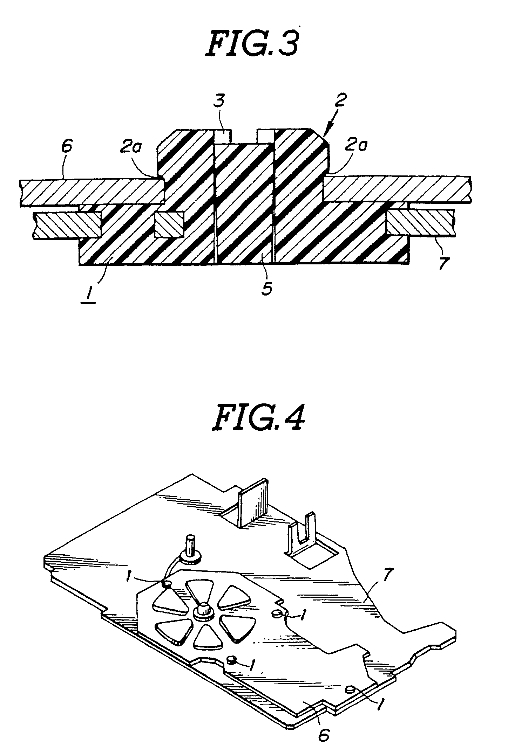

At this time, engagement between the outer periphery of the fastening extension 2 and the inner periphery of the through opening 6a is still loose enough to allow relative axial displacement of the first and second substrates 7 and 6. Then, the head of the knock member 5 is struck with an appropriate tool, such as a hammer, with an impact sufficient to break or sheer off the connecting section 1d. This impact forces the knock member 5 into the recess 3, which causes radially symmetric distension of the fastening extension 2. The magnitude of expansion of the diameter of the fastening extension 2 is sufficient to establish firm engagement between the outer periphery of the fastening extension 2 and the groove 1c, as shown in Fig. 3.

Fig. 4 shows an example of application of the fastener 1 constructed as set forth above, for assembling a substrate 6 to a base 7. In the shown example, four fasteners 1 are used to firmly fix the second substrate to the first substrate.

Although a specific embodiment has been illustrated to facilitate better understanding of the invention, it would be possible to embody the present invention in various ways and similarly the shown embodiment can be modified in various ways. For example, the fastener can be made of a flexible metal, such as aluminium or the like. In cases where an aluminium fastener is used and electrically conductive substrates are to be connected, an appropriate insulating member may be provided to ensure insulation between the substrates. Also, it would be possible to provide a plurality of fastening extensions and corresponding knock members on a common main body.

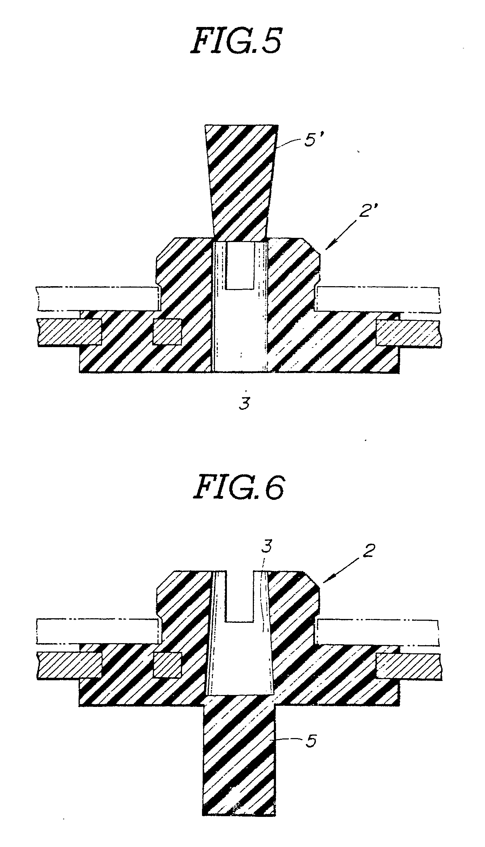

Furthermore, as shown in Fig. 5, the knock member 5' can be inserted from the top of the fastening extension 2'. In this case, the diameter of the knock member at the end opposing the top of the fastening extension 2' can be slightly smaller than the inner diameter of the through opening 3 and the diameter of the end remote from the top of the fastening extension can be slightly but sufficiently greater than the inner diameter of the through opening 3. Also, as shown in Fig. 6, instead of tapering the knock member as set out with respect to the preferred embodiment, a similar effect can be expected by slightly tapering the inner periphery of the recess or opening 3. In the example shown in Fig. 6, the fastener 1 is made of aluminium and the inner diameter of the recess gradually decreases toward the top.

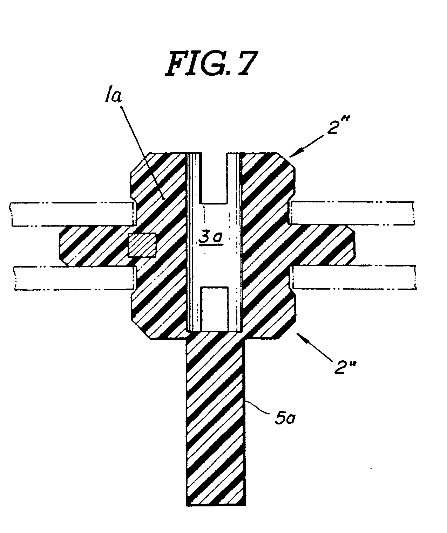

Fig. 7 is a modification of the example shown in Fig. 5. In this modification, a pair of fastening extensions 2'' extend outwards from a plate-shaped main body 1a. The inner diameter of an opening or recess 3a gradually decreases toward the distal ends of the respective fastening extensions 2''. A knock member 5a has a length corresponding to or slightly shorter than the overall length of the opening 3a.

With the construction of Fig. 7, the fastener 1' can be manufactured wholly independently of the members to be connected. Such fasteners may be useful for connecting a variety of members including substrates for electrical circuits.

## Claims

1. A fastener (1) for fixing at least two members (6, 7) having through openings (6a, 7a) and being placed in opposition to each other,
   - said fastener comprising a main body (1a), at least one cylindrical extension (2, 2') thereof, and a knock member (5, 5', 5a),
   - said extension (2, 2') and said main body (1a) having an axial opening (3, 3a) open at least at one end thereof,
   - said extension (2, 2') being radially deformable at least at a portion near its free end so as to engage with its outer periphery the periphery of the through opening (6a, 7a) of at least one of said two members (6, 7),
   - said main body (1a) having a supporting means engageable with at least one of said two members, and
   - said knock member (5, 5', 5a) being formed integrally with said fastener (1) and opposing said axial opening (3, 3a), said knock member (5, 5', 5a) being connected to the peripheral portion of said open end of said axial opening (3, 3a) through a sheer section (1d) which is sufficiently thin to be sheered off by an impact applied to said knock member (5, 5', 5a) so as to allow entry of said knock member into said axial opening (3, 3a) with resulting outward deformation of said deformable portion of said extension (2, 2'),
   characterized by said supporting means having the form of three circular ribs formed on said main body (1a) and said extension (2, 2') and defining two annular grooves (1b, 1c) therebetween for holding said two members (6, 7) therein.

2. A fastener as claimed in Claim 1, characterized by said main body (1a) having two ribs defining therebetween one (7a) of said two annular grooves, and said extension (2, 2') having one rib (2a) defining together with the adjacent one of said two ribs of said main body (1a) the other (6a) of said two annular grooves.

3. A fastener as claimed in Claim 1, characterized by two extensions (2a, 2b), one on each side of said main body (1a), said main body having one rib and said extensions (2a, 2b) having two ribs defining together with said one rib of said main body (1a) said two annular grooves.

4. A fastener as claimed in any of Claims 1 to 3, characterized in that said extension (2, 2') has at least one slit (4) allowing radial deformation of said deformable portion.

5. A fastener as claimed in any of Claims 1 to 4, characterized by said axial opening (3) being cylindrical and said knock member (5) being tapered such that its larger diameter end is placed within the deformable portion of said extension (2) when driven into it.

6. A fastener as claimed in any of Claims 1 to 4, characterized by said knock member (5', 5a) being cylindrical and said axial opening (3, 3a) being tapered towards the radially deformable portion of said extension (2, 2a, 2b).

7. A fastener as claimed in any of Claims 1 to 6, characterized by said axial opening (3, 3a) being open at the free end of said extension (2, 2a, 2b).

8. A fastener as claimed in any of Claims 1 to 6, characterized by said axial opening being open at the main body portion of said fastener.

9. A fastener as claimed in any of Claims 1 to 8, characterized in that said fastener (1) is made of a synthetic resin.

10. A fastener as claimed in any of Claims 1 to 9, characterized in that said main body (1a) is initially fixed to the corresponding one (7) of the two members by means of outsert moulding.

11. An assembly of two board-like members (6,7) and the fastener (1) of the preceding claims.

12. The assembly as claimed in claim 11, characterized in that said rib (2a) formed at said extension (2,2',2") of said fastener (1), has a greater diameter than the inner diameter of said through opening (6a) of one (6) of said members (6,7), whereby inserting said extension (2,2',2") through said through opening (6a) causes radial inward deformation of said deformable portion of said extension (2,2',2").

**Revendications**

1. Dispositif de fixation (1) destiné à fixer au moins deux organes (6, 7) ayant des ouvertures débouchantes (6a, 7a) et placés l'un en face de l'autre,
   - le dispositif de fixation comprenant un corps principal (1a), au moins un prolongement cylindrique (2, 2') du corps, et un organe à frapper (5, 5', 5a),
   - le prolongement (2, 2') et le corps principal (1a) ayant une ouverture axiale (3, 3a) qui débouche au moins à une extrémité,

- le prolongement (2, 2') étant radialement déformable au moins dans une partie proche de son extrémité libre afin qu'il soit au contact, par sa périphérie externe, avec la périphérie de l'ouverture débouchante (6a, 7a) de l'un des deux organes (6, 7) au moins,

- le corps principal (1a) ayant un dispositif de support destiné à être au contact de l'un au moins des deux organes, et

- l'organe à frapper (5, 5', 5a) étant formé en une seule pièce avec le dispositif de fixation (1) et étant disposé en face de l'ouverture axiale (3, 3a), l'organe à frapper (5, 5', 5a) étant raccordé à la partie périphérique de l'extrémité ouverte de l'ouverture axiale (3, 3a) par une section à cisailler (1d) qui est suffisamment mince pour se séparer par cisaillement sous l'action d'un choc appliqué à l'organe à frapper (5, 5', 5a) si bien que l'organe à frapper peut pénétrer dans l'ouverture axiale (3, 3a) et provoquer une déformation vers l'extérieur de la partie déformable du prolongement (2, 2'),

caractérisé en ce que le dispositif de support a la forme de trois nervures circulaires formées sur le corps principal (1a) et le prolongement (2, 2') et délimitant deux gorges annulaires (1b, 1c) entre elles de manière que les deux organes (6, 7) soient retenus dans les gorges.

2. Dispositif de fixation selon la revendication 1, caractérisé en ce que le corps principal (1a) a deux nervures délimitant entre elles l'une (7a) des deux gorges annulaires, et le prolongement (2, 2') a une nervure (2a) qui délimite l'autre (6a) des deux gorges annulaires avec celle des deux nervures du corps principal (1a) qui est adjacente.

3. Dispositif de fixation selon la revendication 1, caractérisé par deux prolongements (2a, 2b), placés chacun d'un côté du corps principal (1a), le corps principal ayant une nervure et les prolongements (2a, 2b) ayant deux nervures délimitant les deux gorges annulaires avec la nervure du corps principal (1a).

4. Dispositif de fixation selon l'une des revendications 1 à 3, caractérisé en ce que le prolongement (2, 2') a au moins une fente (4) qui permet la déformation radiale de la partie déformable.

5. Dispositif de fixation selon l'une quelconque des revendications 1 à 4, caractérisé en ce que l'ouverture axiale (3) est cylindrique et l'organe à frapper (5) a une forme tronconique si bien que son extrémité de plus grand diamètre est placée dans la partie déformable du prolongement (2) lorsqu'il a été chassé à l'intérieur.

6. Dispositif de fixation selon l'une des revendications 1 à 4, caractérisé en ce que l'organe à frapper (5', 5a) est cylindrique et l'ouverture axiale (3, 3a) est tronconique vers la partie radialement déformable du prolongement (2, 2a, 2b).

7. Dispositif de fixation selon l'une des revendications 1 à 6, caractérisé en ce que l'ouverture axiale (3, 3a) est ouverte à l'extrémité libre du prolongement (2, 2a, 2b).

8. Dispositif de fixation selon l'une des revendications 1 à 6, caractérisé en ce que l'ouverture axiale débouche au niveau de la partie du corps principal du dispositif de fixation.

9. Dispositif de fixation selon l'une des revendications 1 à 8, caractérisé en ce que le dispositif de fixation (1) est formé d'une résine de synthèse.

10. Dispositif de fixation selon l'une des revendications 1 à 9, caractérisé en ce que le corps principal (1a) est fixé initialement à l'un (7) des deux organes qui lui correspond par moulage d'un prisonnier externe.

11. Ensemble de deux organes (6, 7) analogues à des cartes et du dispositif de fixation (1) des revendications précédentes.

12. Ensemble selon la revendication 11, caractérisé en ce que la nervure (2a) formée sur le prolongement (2, 2', 2'') du dispositif de fixation (1) a un diamètre supérieur au diamètre interne de l'ouverture débouchante (6a) de l'un (6) desdits organes (6, 7), si bien que l'introduction du prolongement (2, 2', 2'') dans l'ouverture débouchante (6a) provoque une déformation radiale vers l'intérieur de la partie déformable du prolongement (2, 2', 2'').

**Patentansprüche**

1. Ein Befestigungsmittel (1) zum Befestigen von wenigstens zwei Elementen (6, 7), die Durchgangsöffnungen (6a, 7a) aufweisen und einander gegenüberliegend angeordnet sind, wobei

- das Befestigungsmittel einen Grundkörper (1a), wenigstens eine zylindrische Verlängerung (2, 2') desselben und ein Stoßelement (5, 5', 5a) umfaßt,
- die Verlängerung (2, 2') und der Grundkörper (1a) eine axiale Öffnung (3, 3a) aufweisen, die an wenigstens einem Ende offen ist,
- die Verlängerung (2, 2') wenigstens in einem Bereich nahe ihrem freien Ende radial verformbar ist, um mit ihrem Außenumfang in Eingriff mit dem Umfang der Durchgangsöffnung (6a, 7a) wenigstens eines der beiden Elemente (6, 7) zu gelangen,
- der Grundkörper (1a) eine Halterungseinrichtung aufweist, die mit wenigstens einem der beiden Elemente in Eingriff bringbar ist, und
- das Stoßelement (5, 5', 5a) einteilig mit dem Befestigungsmittel (1) geformt und der axialen Öffnung (3, 3a) zugewandt ist, wobei das Stoßelement (5, 5', 5a) mit dem peripheren Bereich des offenen Endes der axialen Öffnung (3, 3a) durch einen Abscherabschnitt (1d) verbunden ist, der ausreichend dünn ist, damit es durch einen Schlag auf das Stoßelement (5, 5', 5a) abscherbar ist, so daß das Stoßelement mit den Ergebnis einer nach außen gerichteten Verformung des verformbaren Bereichs der Verlängerung (2, 2') in die axiale Öffnung (3, 3a) eindringen kann,
**dadurch gekennzeichnet,**
daß die Halterungseinrichtung in Form von drei umlaufenden Rippen ausgebildet ist, die an dem Grundkörper (1a) und der Verlängerung (2, 2') angeformt sind und zwischen sich zwei ringförmige Nuten (1b, 1c) zum Festhalten der beiden Elemente (6, 7) definieren.

2. Ein Befestigungsmittel nach Anspruch 1,
**dadurch gekennzeichnet,**
daß der Grundkörper (1a) zwei Rippen aufweist, die zwischen sich eine (7a) der zwei ringförmigen Nuten definieren, und die Verlängerung (2, 2') mit einer Rippe (2a) versehen ist, die zusammen mit der benachbarten der zwei Rippen des Grundkörpers (1a) die andere (6a) der zwei ringförmigen Nuten definiert.

3. Ein Befestigungsmittel nach Anspruch 1,
**gekennzeichnet durch** zwei Verlängerungen (2a, 2b), eine an jeder Seite des Grundkörpers (1a), wobei dieser Grundkörper eine Rippe und diese Verlängerungen (2a, 2b) zwei Rippen aufweisen, die zusammen mit der einen Rippe des Grundkörpers (1a) die zwei ringförmigen Nuten definieren.

4. Ein Befestigungsmittel nach wenigstens einem der Ansprüche 1 bis 3,
**dadurch gekennzeichnet,**
daß die Verlängerung (2, 2') wenigstens einen Schlitz (4) aufweist, der die radiale Verformung des verformbaren Bereichs erlaubt.

5. Ein Befestigungsmittel nach wenigstens einem der Ansprüche 1 bis 4,
**dadurch gekennzeichnet,**
daß die axiale Öffnung (3) zylindrisch ist und das Stoßelement (5) sich derart verjüngt, daß sein Ende mit dem größeren Durchmesser innerhalb des verformbaren Bereichs der Verlängerung (2) angeordnet ist, wenn es in diese eingeschlagen ist.

6. Ein Befestigungsmittel nach wenigstens einem der Ansprüche 1 bis 4,
**dadurch gekennzeichnet,**
daß das Stoßelement (5', 5a) zylindrisch ist und die axiale Öffnung (3, 3a) sich in Richtung des radial verformbaren Bereichs der Verlängerung (2, 2a, 2b) verjüngt.

7. Ein Befestigungsmittel nach wenigstens einem der Ansprüche 1 bis 6,
**dadurch gekennzeichnet,**
daß die axiale Öffnung (3, 3a) am freien Ende der Verlängerung (2, 2a, 2b) offen ist.

8. Ein Befestigungsmittel nach wenigstens einem der Ansprüche 1 bis 6,
**dadurch gekennzeichnet,**
daß die axiale Öffnung am Grundkörper-Abschnitt des Befestigungsmittels offen ist.

9. Ein Befestigungsmittel nach wenigstens einem der Ansprüche 1 bis 8,
**dadurch gekennzeichnet,**
daß das Befestigungsmittel (1) aus einem Kunststoff hergestellt ist.

10. Ein Befestigungsmittel nach wenigstens einem der Ansprüche 1 bis 9,
**dadurch gekennzeichnet,**
daß der Grundkörper (1a) anfänglich am entsprechenden (7) der beiden Elemente mittels Outsert-Formung befestigt ist.

11. Eine Anordnung bestehend aus zwei plattenähnlichen Elementen (6, 7) und dem Befestigungsmittel (1) nach den vorstehenden Ansprüchen.

12. Die Anordnung nach Anspruch 11,
   **dadurch gekennzeichnet,**
   daß die an die Verlängerung (2, 2', 2'') des Befestigungsmittels (1) angeformte Rippe (2a) einen Durchmesser aufweist, der größer als der Innendurchmesser der Durchgangsöffnung (6a) eines (6) der Elemente (6, 7) ist, wodurch das Durchstecken der Verlängerung (2, 2', 2'') durch die Durchgangsöffnung (6a) eine radial nach innen gerichtete Verformung des verformbaren Bereichs der Verlängerung (2, 2', 2'') bewirkt.

## FIG.1

## FIG.2

*FIG.3*

*FIG.4*

# FIG.5

# FIG.6

# FIG. 7